# EUROPEAN PATENT APPLICATION

(11) **EP 3 852 235 A1**
(43) Date of publication of application: **21.07.2021**
(21) Application number: 19874415.3
(22) Date of filing: 16.10.2019
(51) Int. Cl.: H02J 50/10, H02K 11/00, G01S 17/08, H04B 10/11

(54) **CONTACTLESS POWER SUPPLY AND DATA COMMUNICATION DEVICE, AND SYSTEM HAVING ROTATION-DRIVE UNIT, USING SAME**

(30) Priority: 16.10.2018 KR 20180123172
(71) Applicant: Lidro, Geumcheon-gu Seoul 08504 (KR)
(72) Inventor: MOON, Myung Il, Incheon 21331 (KR)
(74) Representative: Isarpatent
(86) International application number: PCT/KR2019/013571
(87) International publication number: WO 2020/080820

(57) **Abstract**

Disclosed are a contactless power supply and data communication device and a system using same. The contactless power supply and data communication device has a rotation part and a fixed part formed as a pair, the rotation part rotating by a motor, and the fixed part being spaced apart from the rotation unit by a predetermined distance, receiving external power, and fixedly operating, wherein the rotation part and the fixed part each comprise: a ferrite core having a hollow-ring-shaped inner through hole; a control board for fixing the ferrite core at the center and carrying out a control function; and an optical communication module positioned at the center portion of the control board, and by means of such configuration, power is supplied to the rotation part by means of the electromagnetic induction of power which is supplied to the fixed part, and the rotation part and the fixed part carry out data communication by means of the optical communication modules using infrared rays, etc.

## Description

### [Technical Field]

The present invention relates to a contactless power supply and data communication device, and more particularly, to a contactless power supply and data communication device that is capable of being coupled to a mechanism having a rotation part and a fixed part in such a manner as to perform contactless power supply from the fixed part to the rotation part and capable of performing data transmission and reception between the rotation part and the fixed part, and to a system having a rotation drive unit, using the same.

### [Background Art]

Generally, a contact power transfer device using a contact circuit is adopted in a power supply system of a motor. Advantageously, the contact power transfer device is simple in configuration and is low in cost, but it is connected wiredly, so that it is not easy to be applied to a mechanism having a rotational structure or rotation drive unit.

So as to solve such problems, there is another conventional technology in which a slip ring as an electromechanical part called a rotary joint, a rotary connector, and so on is commercially used. The slip ring serves to supply a power source or electric signal to a rotating object, and if a device that operates with the power received is provided at the interior of the object, the electric wire connected thereto may be twisted to make it impossible to rotate the object. In this case, the slip ring serves as a kind of rotating type connector that transfers the power to the object, without any twist of the electric wire, thereby preventing the occurrence of the above-mentioned problems.

However, the contactless power transfer device like the slip ring is commonly used only for power supply, and a graphite type low-cost slip ring is generally used. In this case, unfortunately, the graphite type slip ring has difficulties in defect occurrence and maintenance, increase in kinds of fine signals, complication in structure, high cost, and high levels of technical requirements.

As still another conventional technology, a three axes slip ring motor with optical signal transfer means is disclosed in Korean Patent No.10-1671352 (October 26, 2016). According to the conventional technology, the three axes slip ring motor is configured to have a pressure transfer part for transferring pressure, and a power transfer part for transferring power, and an optical signal transfer part for transferring an optical signal, which are formed as a single structure, so that the pressure, the power, and the optical signal can be supplied through one slip ring.

However, the conventional contactless slip ring is complicated in structure because it has a rotor, a printed circuit board, a connector, and a slip ring unit, and further, the conventional contactless slip ring transfers the optical signal through an optical cable in a through hole, without using wireless optical communication. Accordingly, the conventional contactless slip ring has to have the though hole for transferring the optical signal, so that it is hard to be manufactured and to ensure good durability, reliability, and reproducibility.

### [Disclosure]

### [Technical Problem]

Accordingly, the present invention has been made in view of the above-mentioned problems occurring in the related art, and it is an object of the present invention to provide a contactless power supply and data communication device that is capable of arranging a rotation drive unit (a load side) like a rotating motor and a power side fixed unit coupled to the rotation drive unit by means of wireless power transfer, while performing contactless data transmission and reception between the load side and the power side.

It is another object of the present invention to provide a contactless power supply and data communication device and a system or application system having a rotation drive unit, using the same that are capable of providing means for stably performing power supply between a rotation part and a fixed part and building a data communication environment between the rotation part and the fixed part.

### [Technical Solution]

To accomplish the above-mentioned objects, according to one aspect of the present invention, there is provided a contactless power supply and data communication device including: a rotation part rotating by a motor; and a fixed part spaced apart from the rotation part by a predetermined distance in such a manner as to operate fixedly with external power supplied thereto, the fixed part being paired to the rotation part, wherein the power supplied to the fixed part is inducedly supplied to the rotation part by means of electromagnetic induction, and through a first optical communication module located on the rotation part and a second optical communication module located on the fixed part, wireless signal or data transmission and reception are performed.

According to the present invention, the fixed part and the rotation part include one pair of ferrite cores with hollow portions in such a manner as to face each other on one end surface thereof, and the first optical communication module and the second optical communication module perform the wireless signal or data transmission and reception through the hollow portions.

To accomplish the above-mentioned objects, according to another aspect of the present invention, there is provided a contactless power supply and data communication device including: a mechanism having a rotation part rotating by a motor and a fixed part facingly spaced apart from the rotation part, the rotation part and the fixed part being paired to each other; a first printed circuit board located on the rotation part; a first ferrite core located on the center of one surface of the rotation part on top of the first printed circuit board; a first coil wound onto the first ferrite core in such a manner as to be in parallel to one end surface of the first ferrite core and to allow both end portions to be connected to power input terminals of the first printed circuit board; a first optical communication module located on the first printed circuit board in such a manner as to be exposed to a hollow portion formed on the first ferrite core; a second printed circuit board located on the fixed part to receive external power; a second ferrite core provided on the second printed circuit board to face the first ferrite core; a second coil wound onto the second ferrite core in such a manner as to be in parallel to one end surface of the second ferrite core which faces one end surface of the first ferrite core and to allow both end portions to be connected to power output terminals of the second printed circuit board; and a second optical communication module located on the second printed circuit board in such a manner as to be exposed to a hollow portion formed on the second ferrite core that is extended in the form of a hollow portion of a linear pipe from the hollow portion of the first ferrite core.

According to the present invention, the device further includes: a first coil former located between the first ferrite core and the first coil; and a second coil former located between the second ferrite core and the second coil.

To accomplish the above-mentioned objects, according to still another aspect of the present invention, there is provided a contactless power supply and data communication device including: a rotation part rotating by a motor; and a fixed part spaced apart from the rotation part by a predetermined distance in such a manner as to operate fixedly with external power supplied thereto, the fixed part being paired to the rotation part, wherein the rotation part and the fixed part each include a ferrite core having a hollow ring-shaped inner through hole formed thereon, a control board for fixing the ferrite core to the center thereof and performing control operations, and an optical communication module located on the center of the control board, so that the power supplied to the fixed part is supplied to the rotation part by means of electromagnetic induction, and the rotation part and the fixed part perform data communication through the respective optical communication modules.

According to the present invention, the rotation part and the fixed part each include a coil former inserted into the inner ring space of the ferrite core and a coil wound on the outer peripheral surface of the coil former.

According to the present invention, the first optical communication module of the rotation part and the second optical communication module of the fixed part perform the bi-directional data communication through the through hole of the ferrite core of the rotation part and the through hole of the ferrite core of the fixed part.

According to the present invention, the first optical communication module of the rotation part and the second optical communication module of the fixed part each include an infrared (IR) sensor for transmitting and receiving an optical signal.

To accomplish the above-mentioned objects, according to yet another aspect of the present invention, there is provided a system including: any one contactless power supply and data communication device as mentioned above; and a rotation drive unit coupled to the rotation part of the contactless power supply and data communication device.

According to the present invention, the system is a laser range finder or light detection and ranging (LiDAR) system.

### [Advantageous Effects]

According to the present invention, the contactless power supply and data communication device and the system or application system having the rotation drive unit, using the same can perform the power supply to the rotating rotation part under a relatively simple configuration, can be suitably mounted even on various structures, and can be electrically coupled easily to all kinds of electric devices.

According to the present invention, in addition, the optical communication modules are provided on the centers of the through holes formed on the ferrite cores, thereby performing wireless optical communication, without any obstacle.

### [Brief Description of Drawings]

FIG.1 is a schematic front view showing a contactless power supply and data communication device according to an embodiment of the present invention.
FIG.2 is a transverse sectional view taken along the line A-A of FIG.1.
FIG.3 is an exploded perspective view showing the device of FIG.1.
FIG.4 is a perspective view showing an outer shape of a system having a rotation drive unit, using the device of FIG.1.
FIG.5 is a front view showing main parts of a LiDAR system adopted as the system of FIG.4.
FIG.6 is a left side view of the LiDAR system of FIG.5.
FIG.7 is a transverse sectional view taken along the line L-L of the LiDAR system of FIG.5.
FIG.8 is an exploded perspective view showing the LiDAR system of FIG.5.
FIG.9 is a perspective view showing an outer shape of a system having a rotation drive unit, using a contactless power supply and data communication device according to another embodiment of the present invention.

### [Best Mode for Invention]

All terms used in the description and claims herein have the same meanings which are typically understood by those having ordinary skill in the art. The terms, such as ones defined in common dictionaries, should be interpreted as having the same meanings as terms in the context of pertinent technology, and should not be interpreted as having ideal or excessively formal meanings unless clearly defined in the specification.

The present invention may be modified in various ways and may have several exemplary embodiments. Specific exemplary embodiments of the present invention are illustrated in the drawings and described in detail in the detailed description. However, this does not limit the invention within specific embodiments and it should be understood that the invention covers all the modifications, equivalents, and replacements within the idea and technical scope of the invention.

Hereinafter, the present invention will be disclosed in detail with reference to the attached drawings.

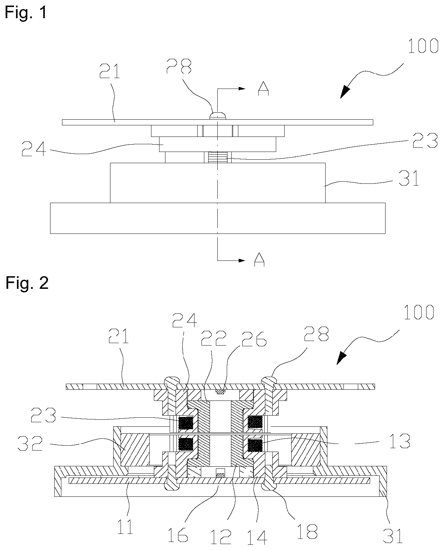

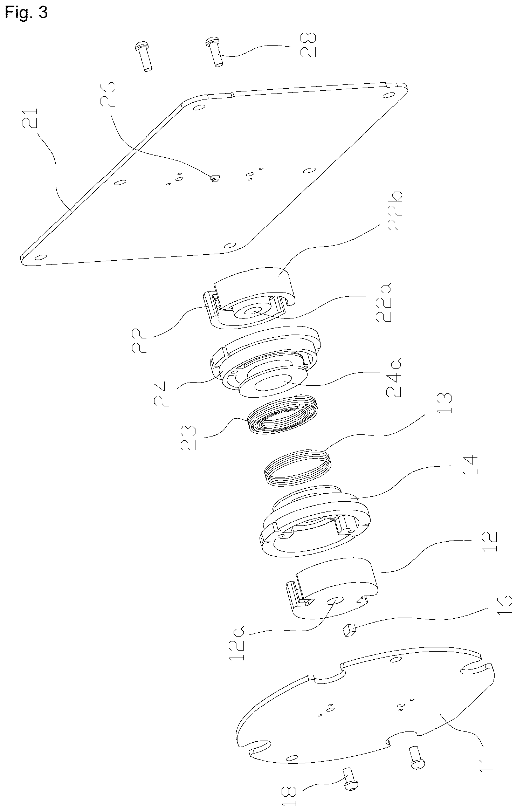

FIG.1 is a schematic front view showing a contactless power supply and data communication device according to an embodiment of the present invention, FIG.2 is a transverse sectional view taken along the line A-A of FIG.1, and FIG.3 is an exploded perspective view showing the device of FIG.1.

Referring to FIGS.1 to 3, a contactless power supply and data communication device 100 according to an embodiment of the present invention includes a mechanism constituted of a rotation part and a fixed part, wherein the rotation part includes a first printed circuit board 11, a first ferrite core 12, a first coil 13, a first coil former 14, and a first optical communication module 16, and the fixed part includes a second printed circuit board 21, a second ferrite core 22, a second coil 23, a second coil former 24, and a second optical communication module 26. The rotation part includes one end portion 31 of a housing of a laser transmission and reception module rotating by a rotation drive unit like a motor, and a reception and communication unit, which is constituted of the first printed circuit board 11, the first ferrite core 12, the first coil 13, the first coil former 14, and the first optical communication module 16, is fixedly supported against one end portion 31 by means of an elastic material 32.

While the laser transmission and reception module is rotating, the reception and communication unit can be aligned with a transmission and communication unit constituted of the first printed circuit board 11, the first ferrite core 12, the first coil 13, the first coil former 14, and the first optical communication module 16.

The laser transmission and reception module includes at least two laser transmission units arranged in facing directions or four or more laser transmission units arranged symmetrically or radially and a plurality of laser reception units arranged on one side of the plurality of laser transmission units in such a manner as to be paired to the laser transmission units. The other end of the laser transmission and reception module is directly or indirectly connected to a driving shaft of the motor, and accordingly, the laser transmission and reception module rotates by the rotation of the driving shaft of the motor. As the rotating speed of the motor is controlled, the rotating speed of the laser transmission and reception module is controlled.

Under the above-mentioned configuration, the rotation part of the mechanism indicates a part rotating by the rotation drive unit, and the fixed part thereof indicates a part facingly spaced apart from the rotation part. The first printed circuit board 11 is located on the rotation part, and the second printed circuit board 21 is located on the fixed part to receive external power to be transmitted to the rotation part.

The first ferrite core 12 passes an effective power signal flowing to the first coil 13 therethrough well and cuts off an ineffective power signal like a high frequency component. Similarly, the second ferrite core 22 passes an effective power signal flowing to the second coil 23 therethrough well and cuts off an ineffective power signal like a high frequency component.

The first ferrite core 12 is located on the center of one surface of the rotation part on top of the first printed circuit board 11 of the rotation part. The first ferrite core 12 has the shape of a drum having a hollow portion 12a, and an imaginary rotating shaft of the first ferrite core 12 is extended to pass through the center of one surface of the rotation part in such a manner as to be located on the rotating shaft of the motor or the rotation drive unit. The hollow portion 12a indicates an internal through hole of the first ferrite core 12.

Further, the second ferrite core 22 is located on one surface of the second printed circuit board 21. The second ferrite core 22 is provided on the second printed circuit board 21 to face the first ferrite core 12. The second ferrite core 22 has the shape of a drum having a hollow portion 22a, and an imaginary rotating shaft of the second ferrite core 22 is extended to pass through the center of the hollow portion 22a of the second ferrite core 22 and is thus connected to the rotating shaft of the first ferrite core 12 in such a manner as to be arranged linearly with the rotating shaft of the motor or the rotation drive unit.

Moreover, the second ferrite core 22 has a cover 22b extended by a given length from one end periphery facing the second printed circuit board 21 in a radial direction of a center axis thereof in such a manner as to be spaced from the outer peripheral surface of a second ferrite core body by a given distance to cover the second ferrite core body in the form of a double tube. Similarly, the first ferrite core 12 has a cover 22b extended by a given length from the other end periphery facing the first printed circuit board 11 in a radial direction of a center axis thereof in such a manner as to be spaced from the outer peripheral surface of a first ferrite core body by a given distance to cover the first ferrite core body in the form of a double tube.

The first coil 13 is wound onto the outer peripheral surface of the first ferrite core 12 in such a manner as to be in parallel to one end surface of the first ferrite core 12 and to allow both end portions to be connected to power input terminals of the first printed circuit board 11. Similarly, the second coil 23 is wound onto the outer peripheral surface of the second ferrite core 22 in such a manner as to be in parallel to one end surface of the second ferrite core 22 which faces one end surface of the first ferrite core 12 and to allow both end portions to be connected to power output terminals of the second printed circuit board 21.

The second coil 23 and the first coil 13 are designated as a transmission coil and a reception coil in the order as mentioned above, and they operate by means of electromagnetic induction so that power is wirelessly transferred from the second coil 23 to the first coil 13. Wireless power may be several watts (W). A quantity of electromagnetic induction or a quantity of wireless power transfer energy may be determined according to the amounts of the first coil 13 and the second coil 23 wound and the distance between the first ferrite core 12 and the second ferrite core 22. If the amounts of the coils wound are increased or the distance is reduced, the power transfer rate becomes raised and the yield is improved.

The first coil former 14 is located between the first ferrite core 12 and the first coil 13, and the second coil former 24 between the second ferrite core 12 and the second coil 23. The first coil former 14 and the second coil former 24 have concave portions through which the coils are wound onto the outer peripheral surfaces of the respective ferrite cores.

The second coil former 24 has a hollow portion 24a adapted to insert the second ferrite core 22 thereinto, and similarly, the first coil former 14 has a hollow portion adapted to insert the first ferrite core 12 thereinto.

The first optical communication module 16 is located on the first printed circuit board 11 in such a manner as to be exposed to the hollow portion of the first ferrite core 12. The second optical communication module 26 is located on the second printed circuit board 21 in such a manner as to be exposed to the hollow portion 22a of the second ferrite core 22, which is extended in the form of a hollow portion of a linear pipe from the hollow portion of the first ferrite core 12.

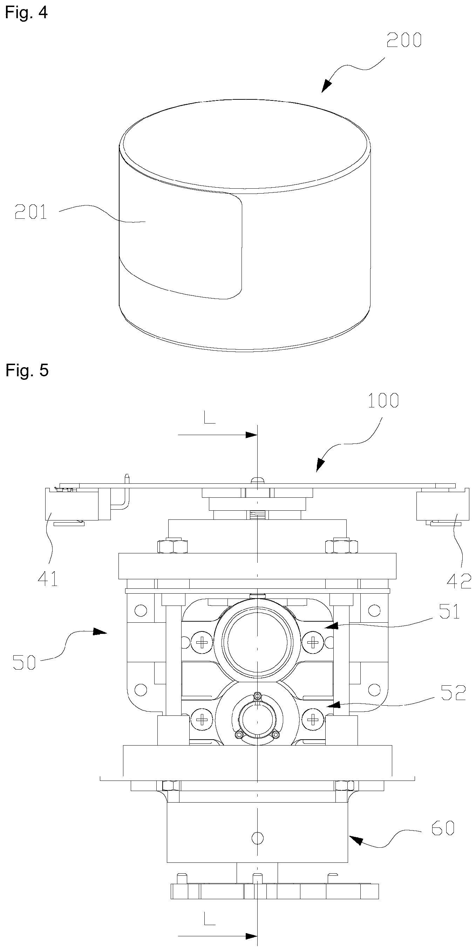

The first printed circuit board 11 and the second printed circuit board 21 support bi-directional communication, and if they are adopted for the LiDAR, they control the laser transmission unit 51 (See FIG.5) and the laser reception unit 52 (See FIG.5) by means of signal processing modules or control modules mounted thereon. To make the above-mentioned configuration, accordingly, the first printed circuit board 11 and the second printed circuit board 21 mount infrared optical communication modules as first and second optical communication modules thereon.

As mentioned above, the contactless power supply and data communication device 100 according to the present invention can perform the power supply to the rotation drive unit on the side of the rotation part by means of the current induced from the fixed part to the rotation part or perform the power supply to a laser driving device on the side of the rotation part, so that through the first and second optical communication modules using the centers of the through holes of the ferrite cores in the same mechanism having the fixed part and the rotation part, the contactless power supply and data communication device 100 can perform contactless or wireless optical communication, without any obstacles.

In addition, the contactless power supply and data communication device 100 according to the present invention is a device that performs the power supply to the rotation part as well as supports bi-directional data communication, and as shown, the contactless power supply and data communication device 100 have the rotation part rotating by the motor and the fixed part fixedly separated from the rotation part in such a manner as to be paired to the rotation part.

The fixed part is spaced apart from the rotation part by a predetermined distance and has a device adapted to receive external power. The predetermined distance means a near distance within which the electromagnetic induction is achieved. The rotation part and the fixed part each include a ferrite core having a hollow ring-shaped inner through hole formed therein, a control board for fixing the ferrite core to the center thereof and having a control function, and an optical communication module located on the center of the control board. The control board can be designated as a control module or printed circuit board.

In specific, the control board is configured to mount a plurality of electronic parts or circuit elements on the printed circuit board (PCB) and to connect them by means of wires, so that power supply, data communication, and predetermined operations of the control circuit can be carried out.

Each ferrite core is configured to have the coil former inserted into the inner ring space thereof and the coil wound on the outer peripheral surface of the coil former. Further, the cylindrical ferrite core is fixed to the center of the control board in a vertical direction.

In this case, the ferrite core is a magnetic core made of ferrite, and accordingly, the ferrite core is a ferromagnetic material used as a core for a transformer or inductor because it has characteristics of high permeability and low conductivity. According to the present invention, the ferrite core, which has the shape of a ring-shaped cylinder with the hollow hole or through hole formed therein, is provided in such a manner as to insert the wound coil into the inner ring space thereof.

According to the present invention, for the convenience of the description, the ferrite cores can be dividedly designated as the rotation part ferrite core and the fixed part ferrite core. Further, the control boards are dividedly designated as the rotation part control board and the fixed part control board, and the optical communication modules dividedly designated as the rotation part optical communication module and the fixed part optical communication module.

That is, the rotation part ferrite core and the fixed part ferrite core have symmetrical structures to each other. Accordingly, the quantities of electromagnetic induction may be determined according to the amounts of the coils wound and the distance between the rotation part ferrite core and the fixed part ferrite core. If the amounts of the coils wound are increased or the distance is reduced, the yield caused by the electromagnetic induction can be improved.

According to the present invention, further, data communication can be performed bi-directionally by means of the optical communication modules located on the centers of the control boards. The rotation part optical communication module and the fixed part optical communication module perform the optical communication through the center of the through hole formed on the rotation part ferrite core and through the center of the through hole formed on the fixed part ferrite core, and they control the additional members of the rotation part or are interconnected with the additional members of the fixed part by means of signal processing carried out by the rotation part control board and the fixed part control board. The rotation part optical communication module and the fixed part optical communication module each may be constituted of an infrared (IR) sensor for transmitting and receiving an optical signal.

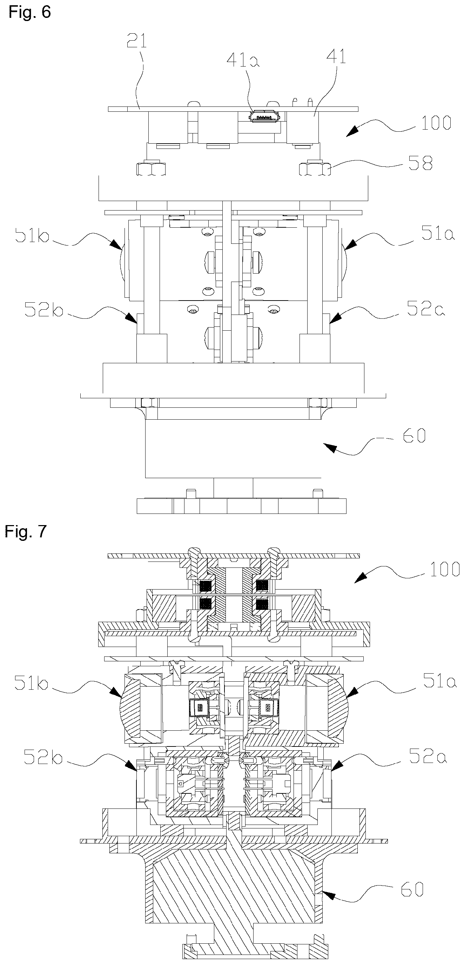

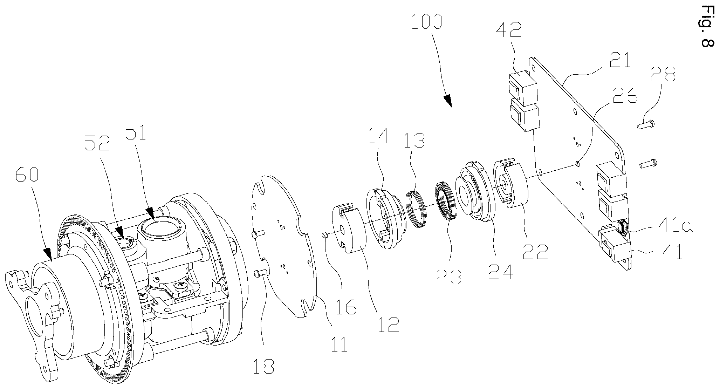

FIG.4 is a perspective view showing an outer shape of a system having a rotation drive unit, using the device of FIG.1. FIG.5 is a front view showing main parts of the LiDAR system adopted as the system of FIG.4. FIG.6 is a left side view of the LiDAR system of FIG.5. FIG.7 is a transverse sectional view taken along the line L-L of the LiDAR system of FIG.5. FIG.8 is an exploded perspective view showing the LiDAR system of FIG.5.

Referring to FIGS.4 to 8, a LiDAR system 200 according to another embodiment of the present invention is a kind of a system having a rotation drive unit 60 and includes a contactless power supply and data communication device 100, a laser transmission and reception module 50, and the rotation drive unit 60. The LiDAR system 200 is configured to transmit laser light through a laser transmitting window 201 formed on one surface of a cylindrical case thereof and to receive the laser light reflected back from an external object.

The contactless power supply and data communication device 100 includes power connectors 41 to which external power is applied and communication connectors 42 to which external networks are connected, and of course, an integrated connector 41a for both of power and communication may be selectively or additionally provided. The power connectors 41, the integrated connector 41a, and the communication connectors 42 are mounted on a second printed circuit board 21.

According to the present invention, the LiDAR system 200 has the laser transmission and reception module 50 rotating by a motor to perform laser transmission and reception. The laser transmission and reception module 50 has one end coupled to the contactless power supply and data communication device 100 by means of fastening means 58 like bolts and nuts.

The laser transmission and reception module 50 can be designated simply as a laser module. The laser module includes a plurality of laser transmission units 51a and 51b and a plurality of laser reception units 52a and 52b.

If two laser transmission units 51a and 51b are provided, they are arranged toward the opposite directions to each other in a given direction perpendicular to a rotating shaft, and if three or more laser transmission units are provided, they are arranged equally in a radial direction perpendicular to the rotating shaft. The laser reception units 52a and 52b are arranged adjacent to the laser transmission units 51a and 51b in such a manner as to be paired to the laser transmission units 51a and 51b.

Further, the LiDAR system 200 has the contactless power supply and data communication device 100 adapted to perform power supply to the laser module, and the rotation part of the contactless power supply and data communication device 100 includes a rotation part control board, a rotation part ferrite core mounted on the rotation part control board and having an inner through hole formed thereon, and a coil former located on the inner ring space of the ferrite core to wind a coil thereonto.

Symmetrically to the rotation part, the fixed part, which is spaced apart from the laser module by a given distance, includes a fixed part control board, a fixed part ferrite core, a coil former, and a coil wound onto the coil former.

The rotation drive unit 60 includes the motor. According to the present invention, the rotation drive unit 60 is coupled to the other end portion of the laser module by means of fastening means like bolts and nuts and provides a rotary force to the laser module so that the laser module can rotate. In this case, the rotation part of the contactless power supply and data communication device 100, which is coupled to one end portion of the laser module, can rotate together with the laser module.

Under the above-mentioned configuration, the LiDAR system 200 serves to supply power to the rotation part through the electromagnetic induction from the power supplied to the fixed part, to supply power necessary for the transmission and reception of the laser module through the current induced to the rotation part, to supply power to the rotation part control board or motor, and to transmit a signal and data for the control of the rotation part control board or a control signal for controlling the operation of the motor.

Further, optical communication modules are mounted on the rotation part control board to which the laser module is coupled and the fixed part control board, so that optical communication can be performed through the centers of the through holes formed on the rotation part ferrite core and the fixed part ferrite core, without any obstacles.

Accordingly, the LiDAR system 200 supplies the current induced from the fixed part to the laser module connected to the rotation part, so that while the laser transmission and reception are performed, the LiDAR system 200 supports the bi-directional communication between the rotation part control board and the fixed part control board to allow the laser transmission and reception of the laser module to be controlled through the signal processing of the rotation part control board.

As described above, the contactless power supply and data communication device 100 mounted on the LiDAR system 200 supplies the power supplied to the fixed part to the rotation part by means of the electromagnetic induction, and further, the contactless power supply and data communication device 100 is effectively applied to various devices or systems in which the rotation part and the fixed part can transmit and receive signal and data by means of the optical communication modules.

On the other hand, the operating principle of the LiDAR system 200 having the rotation drive unit according to the present invention is well known, and therefore, an additional explanation on the operation principle thereof will be avoided. However, the LiDAR system 200 further includes a mirror, and the mirror moves by means of the rotation drive unit in such a manner as to reflect the laser light of the laser transmission units or the laser light of the laser reception units. In this case, the rotation drive unit operates with the power supplied from the contactless power supply and data communication device 100 to thus enable the reflection angle of the mirror to be varied. Further, the operation of the rotation drive unit is controlled according to the control signal received from the contactless power supply and data communication device 100.

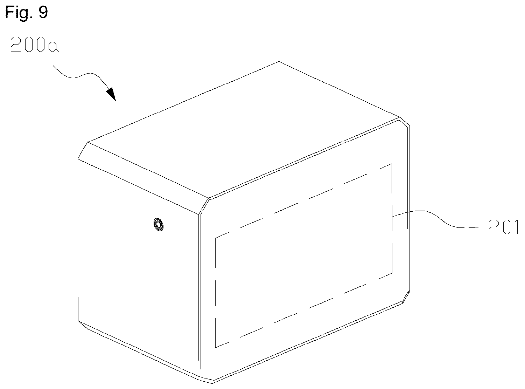

FIG.9 is a perspective view showing an outer shape of a system having a rotation drive unit, using a contactless power supply and data communication device according to yet another embodiment of the present invention.

Referring to FIG.9, a system 200a having a rotation drive unit according to yet another embodiment of the present invention is a laser range finder and includes the contactless power supply and data communication device as described with reference to FIGS.1 to 3, a laser transmitter, a laser receiver, and the rotation drive unit.

Further, the system 200a includes a mirror which reflects the laser light of the laser transmitter or the laser light of the laser receiver. In this case, the rotation drive unit operates with the power supplied from the contactless power supply and data communication device to thus enable the reflection angle of the mirror to be varied. Further, the operation of the rotation drive unit is controlled according to the control signal received from the contactless power supply and data communication device.

If the laser range finder using the contactless power supply and data communication device according to the present invention is applied, like this, the operation control of the motor for controlling the movement of the mirror and the power supply are carried out by means of the contactless power supply and data communication device provided in the form of a single module, thereby reducing the volume and weight of the laser range finder, simplifying the laser range finder in configuration to achieve easy manufacturing, and improving the durability and reliability thereof.

The preferred embodiments of the present invention have been disclosed in the specification and drawings. In the description of the present invention, special terms are used not to limit the present invention and the scope of the present invention as defined in claims, but just to explain the present invention. Therefore, persons skilled in the relevant art can appreciate that many modifications and variations are possible in light of the above teachings. It is therefore intended that the scope of the invention be limited not by this detailed description, but rather by the claims appended hereto.

## Claims

1. A contactless power supply and data communication device comprising:
a rotation part rotating by a motor; and
a fixed part spaced apart from the rotation part by a predetermined distance in such a manner as to operate fixedly with external power supplied thereto, the fixed part being paired to the rotation part,
wherein the power supplied to the fixed part is inducedly supplied to the rotation part by means of electromagnetic induction, and through a first optical communication module located on the rotation part and a second optical communication module located on the fixed part, wireless signal or data transmission and reception are performed.

2. The device according to claim 1, wherein the fixed part and the rotation part comprise one pair of ferrite cores with hollow portions in such a manner as to face each other on one end surface thereof, and the first optical communication module and the second optical communication module perform the wireless signal or data transmission and reception through the hollow portions.

3. A contactless power supply and data communication device comprising:
a mechanism having a rotation part rotating by a motor and a fixed part facingly spaced apart from the rotation part, the rotation part and the fixed part being paired to each other;
a first printed circuit board located on the rotation part;
a first ferrite core located on the center of one surface of the rotation part on top of the first printed circuit board;
a first coil wound onto the first ferrite core in such a manner as to be in parallel to one end surface of the first ferrite core and to allow both end portions to be connected to power input terminals of the first printed circuit board;
a first optical communication module located on the first printed circuit board in such a manner as to be exposed to a hollow portion formed on the first ferrite core;
a second printed circuit board located on the fixed part to receive external power;
a second ferrite core provided on the second printed circuit board to face the first ferrite core;
a second coil wound onto the second ferrite core in such a manner as to be in parallel to one end surface of the second ferrite core which faces one end surface of the first ferrite core and to allow both end portions to be connected to power output terminals of the second printed circuit board; and
a second optical communication module located on the second printed circuit board in such a manner as to be exposed to a hollow portion formed on the second ferrite core that is extended in the form of a hollow portion of a linear pipe from the hollow portion of the first ferrite core.

4. The device according to claim 3, further comprising:
a first coil former located between the first ferrite core and the first coil; and
a second coil former located between the second ferrite core and the second coil.

5. The device according to claim 3, wherein the first optical communication module and the second optical communication module each comprise an infrared (IR) sensor for transmitting and receiving an optical signal.

6. A system comprising:
the contactless power supply and data communication device according to claim 1 or 3; and
a rotation drive unit coupled to the rotation part of the contactless power supply and data communication device.

7. The system according to claim 6, which is a laser range finder or light detection and ranging (LiDAR) system.
